# FASCICULE DE BREVET EUROPEEN

(11) **EP 1 442 928 B1**
(45) Date de publication et mention de la délivrance du brevet: **26.07.2006**
(21) Numéro de dépôt: 04290184.3
(22) Date de dépôt: 23.01.2004
(51) Int. Cl.: B60Q 1/12, B60Q 1/10, B60Q 1/14

(54) **Dispositif d'éclairage comportant des moyens pour compenser la défaillance d'un code virage**
Beleuchtungssystem mit Mitteln zur Kompensation von fehlerhaften drehbaren Abblendlichtern
Lighting system with means to compensate the failure of cornering or bending lights.

(30) Priorité: 31.01.2003 FR 0301281
(43) Date de publication de la demande: 04.08.2004
(73) Titulaire: VALEO VISION, 93012 Bobigny Cédex (FR)
(72) Inventeur: Molto, Valérie, 75012 Paris (FR); Blusseau, Eric, 49000 Angers (FR); Albou, Pierre, 75013 Paris (FR)

(56) Documents cités:
- EP-A- 1 260 761
- FR-A- 2 769 071
- FR-A- 2 786 448
- FR-A- 2 797 824
- FR-A- 2 822 425

## Description

La présente invention concerne un dispositif d'éclairage pour un véhicule automobile.

La présente invention concerne plus particulièrement un dispositif d'éclairage agencé à l'avant d'un véhicule, comportant, de part et d'autre de l'axe longitudinal du véhicule, deux projecteurs de croisement qui réalisent un faisceau d'éclairage réglementaire de feu de croisement, et qui sont susceptibles de pivoter, autour d'un axe sensiblement vertical, vers une position braquée à gauche ou braquée à droite lorsque le véhicule est dans une situation de virage respectivement vers la gauche ou vers la droite, et deux projecteurs auxiliaires qui réalisent un faisceau d'éclairage réglementaire auxiliaire.

L'utilisation des projecteurs de croisement pour réaliser un faisceau d'éclairage en virage permet d'améliorer la visibilité du conducteur du véhicule en situation de virage.

Toutefois, en cas de défaillance d'un tel projecteur de croisement, ou code virage, dans sa position braquée, en particulier s'il est braqué vers la gauche, le sens de circulation des véhicules sur la chaussée étant à droite, ce projecteur peut être une source importante d'éblouissements pour les conducteurs circulant en sens inverse, sur la voie de gauche.

Une solution à ce problème est décrite dans FR-2822425.

Ce document décrit un système d'éclairage de type AFS comprenant deux projecteurs fixes droite et gauche et deux projecteurs pivotants droite et gauche. Les projecteurs pivotants effectuent des mouvements de rotation autour d'axes verticaux respectifs dans le cadre d'une fonction d'éclairage en virage et sont équipés de mécanismes de correction de l'angle de site. Un dispositif de surveillance est prévu pour détecter une défaillance éventuelle des projecteurs pivotants et commander des mesures de prévention contre l'éblouissement des conducteurs circulant en sens inverse. Ces mesures de prévention consistent à commander, à travers le mécanisme de correction de l'angle de site, une rotation vers le bas du projecteur pivotant défaillant, autour de l'axe horizontal. Une extinction du projecteur pivotant défaillant, ou une réduction de sa puissance, est également décrite.

Dans la forme de réalisation où le projecteur pivotant défaillant reste activé pour maintenir un éclairage, un tel système présente l'inconvénient d'un éclairage en mode défaillant dont les caractéristiques peuvent s'avérer délicates à maîtriser. En effet, le projecteur pivotant peut se bloquer en rotation dans une position quelconque autour de l'axe vertical et la correction en angle de site n'a pas le même effet sur le faisceau selon la position du projecteur.

L'invention vise à remédier aux problèmes ci-dessus en proposant une solution simple, efficace, et économique.

Dans ce but, l'invention propose un dispositif d'éclairage tel que défini par la revendication 1 annexée.

Selon d'autres caractéristiques de l'invention :
- chaque projecteur de route comporte un correcteur de portée qui est susceptible de modifier l'inclinaison du faisceau de route par rapport à un plan longitudinal horizontal et, pour réaliser le faisceau de compensation, l'unité centrale commande le correcteur de portée du projecteur de route de manière à incliner son faisceau d'éclairage vers le bas ;
- chaque projecteur de route comporte des moyens pour former une coupure supérieure dans son faisceau d'éclairage, et la coupure supérieure est sensiblement confondue avec le plan longitudinal horizontal, lorsque le projecteur de route réalise le faisceau de compensation ;
- chaque projecteur de route est du type à optique de reproduction d'image et comporte un dispositif d'occultation qui délimite un bord de coupure formant la coupure supérieure dans le faisceau d'éclairage produit par le projecteur de route.

D'autres caractéristiques et avantages de l'invention apparaîtront à la lecture de la description détaillée qui suit pour la compréhension de laquelle on se reportera aux dessins annexés dans lesquels :
- la figure 1 est un schéma qui représente un véhicule équipé d'un dispositif d'éclairage réalisé conformément aux enseignements de l'invention ;
- la figure 2 est une vue de dessus qui représente schématiquement le bloc d'éclairage gauche du véhicule de la figure 1 ;
- la figure 3 est un schéma qui représente un faisceau d'éclairage réglementaire de feu de croisement ;
- la figure 4 est une vue similaire à celle de la figure 2 qui représente le projecteur de croisement du bloc d'éclairage gauche dans une position braquée vers la gauche ;
- la figure 5 est un schéma similaire à celui de la figure 3 qui représente un faisceau d'éclairage réglementaire de feu de route et un faisceau d'éclairage de compensation ;
- la figure 6 est une vue en coupe axiale qui représente schématiquement un projecteur de route du dispositif d'éclairage de la figure 1.

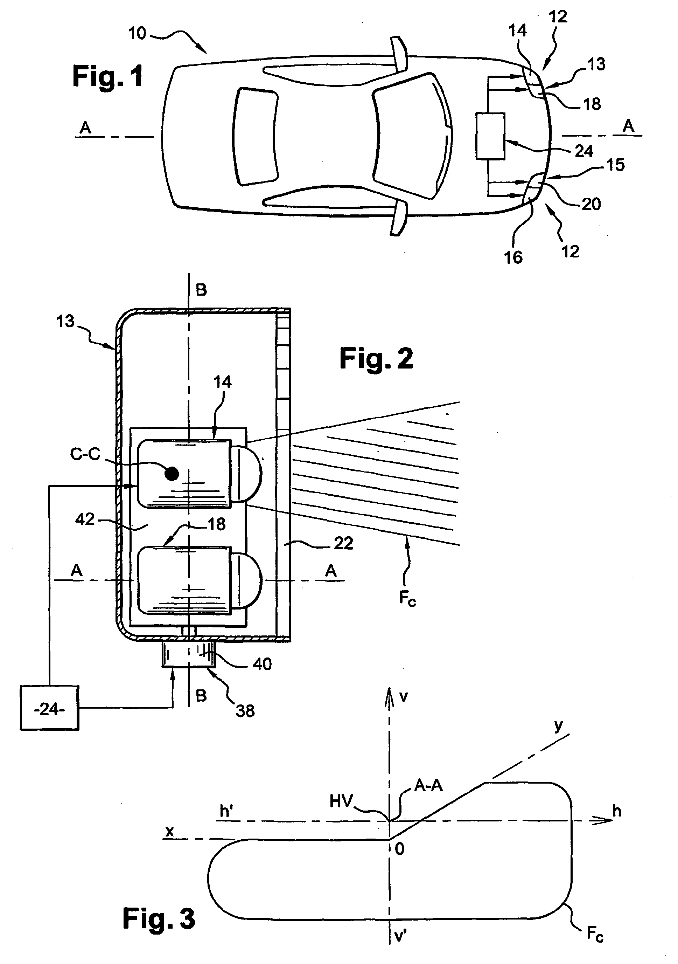

On a représenté sur la figure 1 un véhicule 10 automobile qui comporte un dispositif d'éclairage 12 réalisé conformément aux enseignements de l'invention.

Dans la suite de la description, on utilisera à titre non limitatif, une orientation d'arrière en avant suivant l'axe longitudinal A-A du véhicule 10, c'est à dire de la gauche vers la droite en considérant la figure 1.

Le dispositif d'éclairage 12 est agencé à l'avant du véhicule 10 et il comporte deux blocs d'éclairage, respectivement gauche 13 et droit 15, qui sont agencés de manière sensiblement symétrique par rapport à un plan de symétrie vertical passant par l'axe longitudinal A-A.

Chaque bloc d'éclairage 13, 15 comporte un projecteur de croisement 14, 16 et un projecteur de route 18, 20 distincts qui sont agencés derrière une glace de protection 22. Le bloc d'éclairage gauche 13 est représenté schématiquement sur la figure 2.

Selon le mode de réalisation représenté ici, les projecteurs de croisement 14, 16 sont agencés, dans le bloc d'éclairage 13, 15, du côté opposé à l'axe longitudinal A-A et les projecteurs de route 18, 20 sont agencés du côté de l'axe longitudinal A-A.

Les projecteurs 14, 16, 18, 20 sont réalisés selon des techniques connues.

Lorsqu'ils sont allumés, les projecteurs de croisement 14, 16 produisent ensemble un faisceau d'éclairage réglementaire de feu de croisement, ou faisceau de croisement Fc.

Le faisceau de croisement Fc est caractérisé notamment par une « coupure », c'est à dire une limite directionnelle au-dessus de laquelle une faible intensité lumineuse est émise. Cette coupure est généralement constituée d'un demi-plan horizontal, à gauche de l'axe longitudinal du projecteur (pour un sens de circulation à droite), et d'un demi-plan légèrement incliné vers le haut, à droite de ce même axe longitudinal. Ce dernier demi-plan est relevé d'un « angle de relèvement de coupure » qui est, pour un faisceau normalisé européen, de quinze degrés.

L'éclairement produit par un tel faisceau Fc sur un écran placé à environ vingt-cinq mètres à l'avant des projecteurs de croisement 14, 16 est représenté sur la figure 3, le point HV étant la trace de l'axe longitudinal A-A du véhicule 10, à l'intersection du plan vertical v'v et du plan horizontal h'h. La coupure est définie par la demi-droite Ox qui s'étend parallèlement et au-dessous de l'axe horizontal h'h, du point O vers la gauche, et par la demi-droite Oy, inclinée de quinze degrés, qui s'étend du point O vers le haut et vers la droite.

On note que la description se réfère à un sens de circulation du véhicule 10 à droite. Pour un sens de circulation à gauche, il suffit de considérer les figures représentant l'écran inversées par rapport à l'axe v'v.

Les projecteurs de croisement 14, 16 sont susceptibles de pivoter, autour d'un axe sensiblement vertical C-C, vers une position braquée à gauche ou braquée à droite lorsque le véhicule 10 est dans une situation de virage, respectivement vers la gauche ou vers la droite.

Une unité centrale 24 est prévue pour commander le pivotement des projecteurs de croisement 14, 16, par exemple en fonction de l'angle de braquage des roues directrices du véhicule 10.

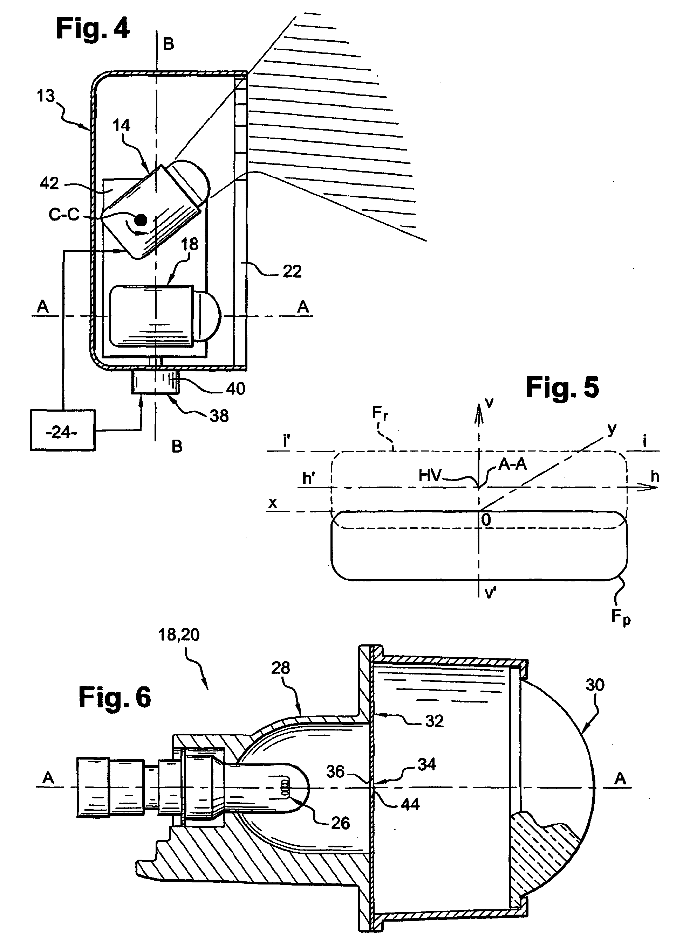

Ainsi, dans une situation de virage orienté vers la gauche, l'unité centrale 24 commande le pivotement des projecteurs de croisement 14, 16, ici dans le sens anti-horaire, de manière à éclairer la partie gauche de la chaussée, comme on l'a représenté sur la figure 4.

Lorsqu'ils sont allumés, les projecteurs de route 18, 20 produisent ensemble un faisceau d'éclairage réglementaire de feu de route, ou faisceau de route Fr.

Le faisceau de route Fr est un faisceau lumineux dont la zone d'intensité lumineuse maximale est sensiblement centrée sur l'axe longitudinal A-A, comme illustré en trait discontinu sur la figure 4.

De préférence, les projecteurs de route 18, 20 sont du type à optique de reproduction d'image, aussi appelé projecteur elliptique. Un tel type de projecteur 18, 20 est représenté sur la figure 5.

Chaque projecteur de route 18, 20 comporte une source lumineuse 26, qui est placée au premier foyer d'un réflecteur 28 de profil sensiblement elliptique, dans un plan longitudinal vertical, une lentille convergente 30 dont un plan focal passe au voisinage d'un second foyer du réflecteur 28.

L'axe optique de chaque projecteur de route 18, 20 est ici sensiblement horizontal et il peut être défini par exemple par les deux foyers du réflecteur 28.

L'axe optique étant généralement parallèle à l'axe longitudinal A-A du véhicule 10, dans la suite de la description on utilisera indistinctement la référence « A-A » pour nommer les deux axes.

Avantageusement, en vue de corriger la répartition de l'intensité lumineuse dans le faisceau de feu de route Fr, et notamment en vue de provoquer une diminution progressive de l'intensité lumineuse dans la zone d'éclairage située verticalement sous l'axe optique A-A, qui est susceptible de provoquer une gêne visuelle par une intensité d'éclairage trop importante à proximité du véhicule 10, chaque projecteur de route 18, 20 comporte un cache 32.

Le cache 32 est par exemple réalisé conformément aux enseignements du document FR-A-2.811.408.

Le cache 32 est intercalé axialement (A-A) entre le réflecteur 28 et la lentille 30, au voisinage du plan focal de la lentille 30.

Le cache 32 délimite, au voisinage de l'axe optique A-A, une fenêtre 34 en forme de fente transversale.

Le bord supérieur 36 de la fenêtre 34 produit, dans le faisceau de route Fr, une diminution progressive de l'intensité lumineuse dans la zone d'éclairage située verticalement sous l'axe optique A-A.

De préférence, conformément à la représentation schématique de la figure 2, chaque bloc d'éclairage 13, 15 comporte un correcteur de portée 38 qui est commandé par l'unité centrale 24.

Sur la figure 2, on a représenté schématiquement le correcteur de portée 38 sous la forme d'un moteur électrique 40 qui est susceptible de provoquer le pivotement, autour d'un axe transversal B-B, qui est sensiblement horizontal et orthogonal à l'axe longitudinal A-A, d'un support 42 portant le projecteur de croisement 14 et le projecteur de route 18.

Le pivotement du support 42 autour de l'axe transversal B-B est commandé par l'unité centrale 24, de manière notamment à corriger la portée du faisceau de croisement Fc et du faisceau de route Fr, c'est à dire l'inclinaison de ces faisceaux Fc, Fr par rapport à un plan longitudinal horizontal, en fonction des variations de l'assiette du véhicule 10. Ces variations d'assiette apparaissent notamment lors des phases d'accélération et lors des phases de freinage du véhicule 10.

Conformément aux enseignements de l'invention, lorsque l'unité centrale 24 détecte la défaillance d'un projecteur de croisement 14, 16 en position braquée, elle commande l'extinction du projecteur de croisement 14, 16 défaillant et l'allumage d'au moins un projecteur de route 18, 20.

L'allumage du projecteur de route 18, 20 compense l'extinction du projecteur de croisement 14, 16 défaillant en produisant un faisceau d'éclairage de compensation Fp.

Le faisceau de compensation Fp doit respecter les valeurs photométriques réglementaires maximales au-dessus d'un plan longitudinal horizontal. En particulier, le faisceau de compensation Fp ne doit pas être éblouissant pour les conducteurs circulant en sens inverse, c'est à dire qu'il doit émettre une faible quantité de lumière au-dessus de la demi-droite Ox correspondant à la coupure plate du faisceau de croisement Fc.

Par conséquent, lors de la défaillance d'un projecteur de croisement 14, 16, l'unité centrale 24 commande des moyens qui provoquent la modification de la forme du faisceau d'éclairage produit par le projecteur de route 18, 20 allumé, de manière que son faisceau d'éclairage respecte les valeurs photométriques réglementaires maximales au-dessus du plan longitudinal horizontal.

Selon le mode de réalisation représenté ici, l'unité centrale 24 commande donc le correcteur de portée 38 de manière qu'il rabatte le faisceau d'éclairage produit par le projecteur de route 18, 20 sous la demi-droite Ox, comme illustré sur la figure 5 par le faisceau de compensation Fp. On obtient alors un faisceau de compensation Fp respectant les valeurs photométriques réglementaires.

On note que le dispositif d'éclairage 12 selon l'invention présente l'avantage de permettre la compensation de la défaillance d'un projecteur de croisement 14, 16 sans ajouter de pièce supplémentaire puisque le correcteur de portée 38 est généralement déjà présent.

La compensation peut être effectuée en allumant un seul projecteur de route 18, 20 ou les deux projecteurs de route 18, 20.

De préférence, le bord inférieur 44 de la fenêtre 34 du cache 32 forme une coupure supérieure dans le faisceau d'éclairage produit par le projecteur de route 18, 20, c'est à dire qu'il limite la valeur maximale de l'intensité lumineuse produite au-dessus d'une limite directionnelle i'i.

La position verticale du bord inférieur 44 est choisie de manière que, lorsque le projecteur de route 18, 20 est utilisé pour réaliser le faisceau de route Fr, la limite directionnelle i'i soit suffisamment haute pour ne pas être perçue par le conducteur du véhicule 10, et de manière que, lorsque le projecteur de route 18, 20 est utilisé pour réaliser le faisceau de compensation Fp, la limite directionnelle i'i soit sensiblement confondue avec la demi-droite Ox.

Comme le bord supérieur 36, le bord inférieur 44 du cache 32 peut être réalisé conformément aux enseignements du document FR-A-2.811.408, de manière que la coupure formée dans le faisceau d'éclairage produit par les projecteurs de route 18, 20 soit floue et achromatique.

Selon une variante de réalisation (non représentée) de l'invention, les projecteurs de route 18, 20 peuvent être du type à surface complexe, c'est à dire qu'ils comportent chacun un réflecteur, une source lumineuse formée d'un filament, et une glace de protection, la surface réfléchissante étant calculée de manière à former vers l'avant un faisceau de route. Dans ce cas, la surface réfléchissante du réflecteur est calculée de manière à placer judicieusement les petites et les grandes images du filament par rapport à la limite directionnelle i'i pour obtenir un faisceau de compensation Fp respectant les valeurs photométriques réglementaires.

Selon une autre variante de réalisation (non représentée), le faisceau de compensation Fp peut être réalisé par un autre projecteur d'éclairage auxiliaire, par exemple par un projecteur anti-brouillard.

## Revendications

1. Dispositif d'éclairage (12) agencé à l'avant d'un véhicule (10), comportant, de part et d'autre de l'axe longitudinal (A-A) du véhicule (10), deux projecteurs de croisement (14, 16) qui réalisent un faisceau d'éclairage réglementaire de feu de croisement (Fc), et qui sont susceptibles de pivoter, autour d'un axe sensiblement vertical (C-C), vers une position braquée à gauche ou braquée à droite lorsque le véhicule (10) est dans une situation de virage respectivement vers la gauche ou vers la droite, deux projecteurs de route (18, 20) aptes à réaliser un faisceau d'éclairage réglementaire de feu de route (Fr), et une unité centrale (24), **caractérise en ce que** lorsqu'elle détecte la défaillance d'un projecteur de croisement (14, 16) en position braquée, l'unité centrale (24) commande l'extinction du projecteur de croisement (14, 16) défaillant, l'allumage d'au moins un projecteur de route (18, 20) et commande des moyens (38) qui provoquent la modification de la forme du faisceau d'éclairage produit par le projecteur de route (18, 20) allumé, de manière à obtenir un faisceau de compensation (Fp) pour respecter les valeurs photométriques réglementaires maximales au-dessus du plan longitudinal horizontal (Ox).

2. Dispositif d'éclairage (12) selon la revendication précédente, **caractérisé en ce que** chaque projecteur de route (18, 20) comporte un correcteur de portée (38) qui est susceptible de modifier l'inclinaison du faisceau de route (Fr) par rapport à un plan longitudinal horizontal, et **en ce que**, pour réaliser le faisceau de compensation (Fp), l'unité centrale (24) commande le correcteur de portée (38) du projecteur de route (18, 20) de manière à incliner son faisceau d'éclairage vers le bas.

3. Dispositif d'éclairage (12) selon la revendication 1 ou 2, **caractérisé en ce que** chaque projecteur de route (18, 20) comporte des moyens (32) pour former une coupure supérieure dans son faisceau d'éclairage (Fr, Fp), et **en ce que** la coupure supérieure est sensiblement confondue avec le plan longitudinal horizontal (Ox), lorsque le projecteur de route (18, 20) réalise le faisceau de compensation (Fp).

4. Dispositif d'éclairage (12) selon la revendication précédente, **caractérisé en ce que** chaque projecteur de route (18, 20) est du type à optique de reproduction d'image et comporte un dispositif d'occultation (32) qui délimite un bord de coupure (44) formant la coupure supérieure dans le faisceau d'éclairage (Fr, Fp) produit par le projecteur de route (18, 20).

## Claims

1. Lighting apparatus (12) arranged in the front of a vehicle (10) and
comprising, arranged on either side of the longitudinal axis (A-A) of the vehicle (10), two low beam headlights (14, 16) which produce a regulation low or passing light beam (Fc), and which are arranged to pivot about a substantially vertical axis (C-C), towards a position deflected to the left or deflected to the right when the vehicle (10) is in a left hand bend or right hand bend situation respectively, two high beam or cruising headlights (18, 20) which are adapted to produce a regulation cruising headlight or high beam (Fr), and a central unit (24), **characterised in that**, when it detects failure of a low beam light (14, 16) in a deflected position, the central unit (24) causes the faulty low beam headlight (14, 16) to be extinguished, causes at least one high beam headlight (18, 20) to be switched on, and also controls means (38) which cause the form of the light beam produced by the switched-on high beam light (18, 20) to be modified in such a way as to obtain a compensating beam (Fp) such as to comply with the maximum photometric values permitted by regulation above the horizontal longitudinal plane (Ox).

2. Lighting apparatus (12) according to Claim 1, **characterised in that** each high beam light (18, 20) includes a range corrector (38) which is adapted to modify the inclination of the high beam (Fr) with respect to a horizontal longitudinal plane, and **in that**, in order to produce the compensating beam (Fp), the central unit (24) controls the range corrector (38) of the high beam light (18, 20) in such a way as to incline its beam downwards.

3. Lighting apparatus (12) according to Claim 1 or Claim 2, **characterised in that** each high beam light (18, 20) includes means (32) for forming an upper cut-off in its light beam (Fr, Fp), and **in that** the upper cut-off is substantially coincident with the horizontal longitudinal plane (Ox), when the high beam light (18, 20) is producing the compensating beam (Fp).

4. Lighting apparatus (12) according to Claim 3, **characterised in that** each high beam light (18, 20) is of the type having an image reproducing optical element, and includes an occulting means (32) which delimits a cut-off edge (44) for producing the upper cut-off in the light beam (Fr, Fp) produced by the high beam light (18, 20).

## Patentansprüche

1. Beleuchtungsvorrichtung (12), die an der Frontseite eines Fahrzeugs (10) angeordnet ist, mit zwei Abblendlichtscheinwerfern (14, 16) beiderseits der Längsachse (A-A) des Fahrzeugs (10), die ein vorschriftsmäßiges Abblendlicht (Fc) erzeugen und um eine im Wesentliche vertikale Achse (C-C) in eine nach links oder rechts gedrehte Position zu schwenken vermögen, wenn sich das Fahrzeug (10) in einer Links- bzw. Rechtskurve befindet, zwei Fernlichtscheinwerfern (18, 20), die ein vorschriftsmäßiges Fernlicht (Fr) zu erzeugen vermögen, und einer Zentraleinheit (24),
**dadurch gekennzeichnet, dass** die Zentraleinheit (24) beim Erkennen eines Defekts eines Abblendlichtscheinwerfers (14, 16) in gedrehter Position das Ausschalten des defekten Abblendlichtscheinwerfers (14, 16), das Einschalten wenigstens eines Fernlichtscheinwerfers (18, 20) und Mittel (38) steuert, die die Veränderung der durch den eingeschalteten Fernlichtscheinwerfer (18, 20) erzeugten Lichtbündelform solchermaßen bewirken, dass ein Kompensationslichtbündel (Fp) erzielt wird, um die vorgeschriebenen maximal zulässigen Lichtverteilungswerte oberhalb der horizontalen Längsebene (Ox) einzuhalten.

2. Beleuchtungsvorrichtung (12) nach dem vorhergehenden Anspruch,
**dadurch gekennzeichnet, dass** jeder Fernlichtscheinwerfer (18, 20) einen Leuchtweitesteller (38) umfasst, der die Neigung des Fernlichts (Fr) bezüglich der horizontalen Längsebene zu verändern vermag, und dass die Zentraleinheit (24) zum Erzeugen des Kompensationslichtbündels (Fp) den Leuchtweitesteller (38) des Fernlichtscheinwerfers (18, 20) derart ansteuert, dass dessen Lichtbündel nach unten geneigt ist.

3. Beleuchtungsvorrichtung (12) nach Anspruch 1 oder 2,
**dadurch gekennzeichnet, dass** jeder Fernlichtscheinwerfer (18, 20) Mittel (32) umfasst, um in seinem Lichtbündel (Fr, Fp) eine obere Hell-Dunkel-Grenze zu bilden, und dass die obere Hell-Dunkel-Grenze mit der horizontalen Längsebene (Ox) im Wesentlichen deckungsgleich ist, wenn der Fernlichtscheinwerfer (18, 20) das Kompensationslichtbündel (Fp) erzeugt.

4. Beleuchtungsvorrichtung (12) nach dem vorhergehenden Anspruch,
**dadurch gekennzeichnet, dass** jeder Fernlichtscheinwerfer (18, 20) vom Typ eines Scheinwerfers mit Bildwiedergabeoptik ist und eine Abschattungsvorrichtung (32) aufweist, die einen Begrenzungsrand definiert, der die obere Hell-Dunkel-Grenze in dem durch den Fernlichtscheinwerfer (18, 20) erzeugten Lichtbündel (Fp) bildet.
